# EUROPÄISCHE PATENTANMELDUNG

(11) **EP 4 787 691 A1**
(43) Veröffentlichungstag der Anmeldung: **05.08.2026**
(21) Anmeldenummer: 25222413.4
(22) Anmeldetag: 10.12.2025
(51) Int. Cl.: H02M 1/00, B60L 53/24, H02J 7/04, H02M 1/42, H02M 3/00, H02M 7/5387, H02M 5/293

(54) **ELEKTRISCHE SCHALTUNGSANORDNUNG**

(30) Priorität: 03.01.2025 DE 102025100125
(71) Anmelder: Volkswagen Aktiengesellschaft, 38440 Wolfsburg (DE)
(72) Erfinder: Henkenius, Dr. Carsten, 38440 Wolfsburg (DE)

(57) **Zusammenfassung**

Die Erfindung betrifft eine elektrische Schaltungsanordnung (1), umfassend eine Hochvoltbatterie (2), einen Wechselrichter (3), eine Elektromaschine (4) und eine AC-Ladeschaltung (5), wobei die AC-Ladeschaltung (5) einen galvanisch getrennten Resonanzwandler (9) aufweist und ein Sternpunkt (SP) der Elektromaschine (4) direkt mit dem galvanisch getrennten Resonanzwandler (9) verbunden ist, wobei dem Wechselrichter (3) eine Ansteuerschaltung (8) zugeordnet ist, wobei die Ansteuerschaltung (8) eine DQZ-Transformation (20), eine DQ-Steuerung (21) für die Elektromaschine (4), einen Z-Stromregler (23), eine inverse DQZ-Transformation (26), eine PWM-Einheit (27) und eine Leistungsfaktorkorrektur-Schaltung (22) aufweist, wobei die Leistungsfaktorkorrektur-Schaltung (22) in Abhängigkeit einer Spannung (UR) am Ausgang des Resonanzwandlers (9) und einer vorgegebenen Ladeleistung (P) einen Soll-Z-Strom (IZ_) ermittelt.

## Beschreibung

Die Erfindung betrifft eine elektrische Schaltungsanordnung, umfassend eine Hochvoltbatterie, einen Wechselrichter, eine Elektromaschine und eine AC-Ladeschaltung.

Eine solche Schaltungsanordnung ist typischerweise in einem Elektrofahrzeug vorhanden. Dabei kann über die AC-Ladeschaltung die Hochvoltbatterie aus einem ein- oder dreiphasigen externen Wechselspannungsnetz geladen werden. Eine derartige AC-Ladeschaltung wird auch als On-Board-Charger OBC bzw. On-Board-Ladegerät bezeichnet. Dabei sind Ausführungen bekannt, wo der Wechselrichter und das AC-Ladegerät vollständig separat ausgebildet sind. Seit längerem gibt es aber Bestrebungen, das AC-Ladegerät zumindest teilweise in den Wechselrichter zu integrieren.

Eine solche Schaltungsanordnung ist z.B. aus der US 2020/0406769 A1 bekannt, wo dies mittels eines Active Neutral Point Clamped Inverters erfolgt.

Ein anderer Ansatz ist aus der WO 2022/198007 A1 bekannt. Dort kommt ein galvanisch getrennter Resonanzwandler zum Einsatz. Dieser weist auf der Primärseite am Wechselspannungseingang eine Gleichrichterschaltung aus Dioden auf, die die Wechselspannung in eine pulsierende Gleichung wandeln, die dann mittels des Resonanzwandlers auf eine Sekundärseite übertragen wird. An den Wicklungen der Elektromaschine ist dabei mindestens ein Schaltelement angeordnet, um im AC-Ladebetrieb einen Sternpunkt der Wicklungen der Elektromaschine mit der Sekundärseite des Resonanzwandlers zu verbinden. Im Fahrbetrieb wird das Schaltelement geöffnet und der Sternpunkt von dem Resonanzwandler getrennt.

Der Erfindung liegt das technische Problem zugrunde, eine elektrische Schaltungsanordnung weiter zu verbessern.

Die Lösung des technischen Problems ergibt sich durch eine elektrische Schaltungsanordnung mit den Merkmalen des Anspruchs 1. Weitere vorteilhafte Ausgestaltungen der Erfindung ergeben sich aus den Unteransprüchen.

Die elektrische Schaltungsanordnung umfasst eine Hochvoltbatterie, einen Wechselrichter, eine Elektromaschine und eine AC-Ladeschaltung. Die AC-Ladeschaltung weist einen galvanisch getrennten Resonanzwandler auf. Ein Sternpunkt der Elektromaschine ist direkt mit dem galvanisch getrennten Resonanzwandler verbunden, genauer gesagt, mit dessen Sekundärseite. Direkt bedeutet dabei, dass kein Schaltelement vorhanden ist. Direkt soll aber nicht ausschließen, dass zwischen dem Sternpunkt und dem Resonanzwandler nicht noch passive Bauteile angeordnet sein können, was später noch näher erläutert wird. Dem Wechselrichter ist eine Ansteuerschaltung zugeordnet, wobei die Ansteuerschaltung eine DQZ-Transformation, eine DQ-Steuerung für die Elektromaschine, einen Z-Stromregler, eine inverse DQZ-Transformation, eine PWM-Einheit und eine Leistungsfaktorkorrektur-Schaltung aufweist, wobei die Leistungsfaktorkorrektur-Schaltung in Abhängigkeit einer Spannung am Ausgang der Sekundärseite des Resonanzwandlers und einer vorgegebenen Ladeleistung einen Soll-Z-Strom ermittelt. Durch diese DQZ-Regelung kann nun auf das mindestens eine Schaltelement verzichtet werden, da durch die Regelung der Z-Stromkomponente ein gewünschtes Verhalten eingeregelt werden kann, sodass beispielsweise im AC-Ladebetrieb ein entstehendes Motormoment verhindert werden kann und im Motorbetrieb der Z-Strom zu Null geregelt werden kann oder auf einen anderen gewünschten Wert, was später an anderer Stelle noch erläutert wird.

Die Elektromaschine ist vorzugsweise die Antriebsmaschine des Elektrofahrzeugs, deren Wechselrichter für sehr hohe Leistungen ausgelegt ist, sodass dieser ohne Probleme die AC-Ladeleistungen schalten kann. Die Elektromaschine ist beispielsweise eine fremderregte Synchronmaschine. Die AC-Ladeschaltung kann dabei für ein drei- oder einphasiges Laden ausgebildet sein, wobei im dreiphasigen Betrieb drei Resonanzwandler parallel geschaltet sind.

Der Wechselrichter ist ein Pulswechselrichter und kann als 2-Level- oder als 3-Level-Pulswechselrichter ausgebildet sein.

In einer Ausführungsform weist die Ansteuerschaltung zusätzlich eine Störgrößenaufschaltung und/oder eine Vorsteuerung auf, sodass der Z-Strom schneller eingeregelt wird. Die Störgrößenaufschaltung berücksichtigt dabei die Spannung der Hochvoltbatterie und die Spannung am Ausgang des Resonanzwandlers, wobei die Vorsteuerung den Soll-Z-Strom berücksichtigt. Die Ausgangswerte werden dann jeweils auf das Ausgangssignal des Z-Reglers aufaddiert.

In einer weiteren Ausführungsform weist der galvanisch getrennte Resonanzwandler auf der Primärseite eine Halbbrücke mit einem High-Side-Schalter und einem Low-Side-Schalter und eine Halbbrücke aus einem ersten Resonanzkondensator und einem zweiten Resonanzkondensator auf, wobei zwischen den Mittelabgriffen der beiden Halbbrücken eine Resonanzinduktivität und eine Übertrager-Induktivität angeordnet ist, wobei der High-Side-Schalter und der Low-Side-Schalter vollsperrend sind, d.h. diese können jeweils eine positive und eine negative Spannung sperren. Dies ermöglicht es, auf eine Diodengleichrichtung vor dem Resonanzwandler zu verzichten, wobei die Gleichrichtung in den Resonanzwandler integriert ist, wobei durch die vollsperrenden High-Side- und Low-Side-Schalter Kurzschlüsse vermieden werden.

In einer Ausführungsform sind der High-Side-Schalter und der Low-Side-Schalter jeweils als zwei antiseriell verschaltete Transistoren, insbesondere als MOSFETs, vorzugsweise als SiC-MOSFETs, ausgebildet. Alternativ können die Transistoren auch als IGBTs mit parallel geschalteten Dioden ausgebildet sein. In einer weiteren alternativen Ausführungsform sind der High-Side- und der Low-Side-Schalter als GaN-BIDFET ausgebildet.

In einer weiteren Ausführungsform weist der galvanisch getrennte Resonanzwandler auf der Sekundärseite eine Halbbrücke mit zwei Kondensatoren und eine Halbbrücke mit zwei Transistoren auf, wobei zwischen den Mittelabgriffen eine Übertrager-Induktivität angeordnet ist.

In einer weiteren Ausführungsform ist eine Ansteuerschaltung des galvanisch getrennten Resonanzwandlers derart ausgebildet, eine Polarität der anliegenden Ladespannung zu erfassen und die Schalter auf der Primärseite und der Sekundärseite synchron mit einer festen Schaltfrequenz anzusteuern. Hierdurch ist die Isolation sichergestellt und es kann auf eine Regelung verzichtet werden.

In einer weiteren Ausführungsform ist zwischen dem Sternpunkt der Elektromaschine und dem galvanisch getrennten Resonanzwandler eine Zusatzinduktivität angeordnet. Hierdurch kann eine gewünschte Induktivität für Filterzwecke eingestellt werden, ohne die Parameter der Elektromaschine ändern zu müssen.

In einer weiteren Ausführungsform ist an der Primärseite mindestens eine Wechselspannung-Steckdose angeordnet, wobei die Schaltungsanordnung derart ausgebildet ist, während des Fahrbetriebs die Wechselspannung-Steckdose zu versorgen. Dabei wird ausgenutzt, dass einerseits der Resonanzwandler bidirektional ist und der Z-Strom geregelt wird. So kann einerseits ein gewünschtes Antriebsmoment erzeugt werden und gleichzeitig ein negativer Z-Strom in die Sekundärseite des Resonanzwandlers eingespeist werden.

Die Erfindung wird nachfolgend anhand eines bevorzugten Ausführungsbeispiels näher erläutert. Die Figuren zeigen:
- Fig. 1: eine elektrische Schaltungsanordnung und
- Fig. 2: ein schematisches Blockschaltbild einer Ansteuerschaltung eines Wechselrichters.

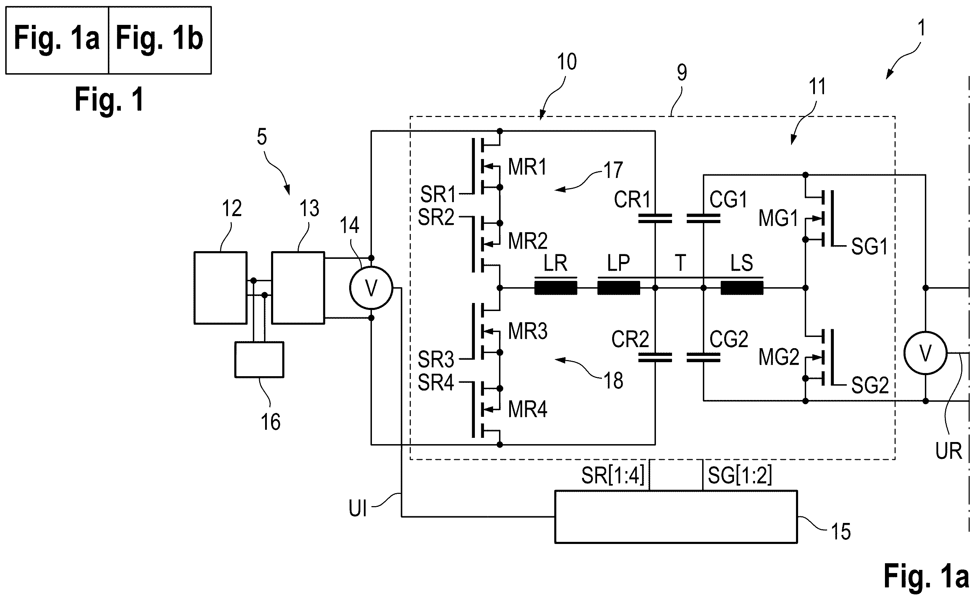

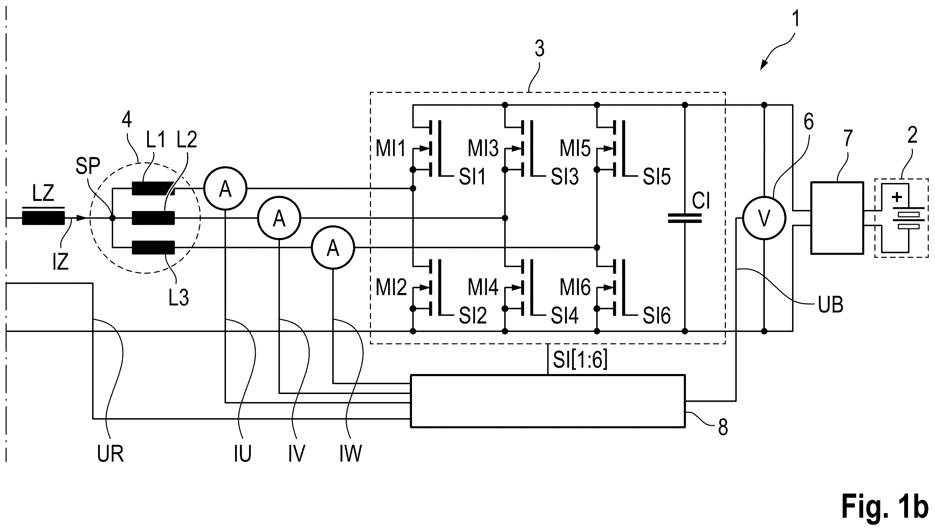

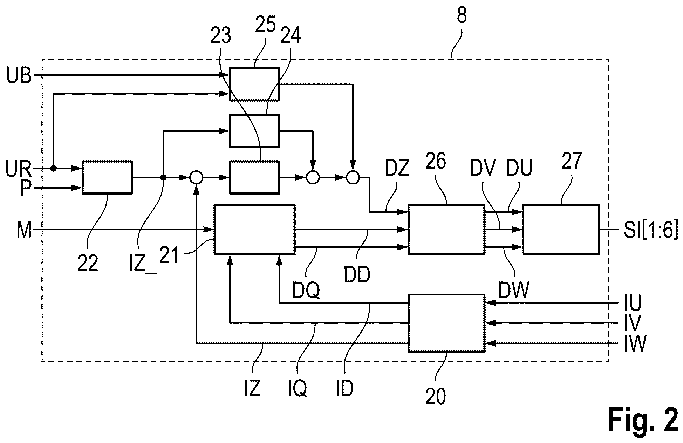

In der Fig. 1 ist eine elektrische Schaltungsanordnung 1 dargestellt. Die Schaltungsanordnung 1 umfasst eine Hochvoltbatterie 2, einen Wechselrichter 3, eine Elektromaschine 4 und eine AC-Ladeschaltung 5. Zwischen dem Wechselrichter 3 und der Hochvoltbatterie 2 ist eine Spannungsmesseinrichtung 6 angeordnet, die die Spannung der Hochvoltbatterie 2 erfasst. Weiter ist ein EMV-Batteriefilter 7 zwischen Hochvoltbatterie 2 und Wechselrichter 3 angeordnet. Der Wechselrichter 3 im dargestellten Beispiel weist sechs Transistoren MI1-MI6 auf, die drei Halbbrücken bilden, deren Mittelabgriffe mit den Phasenwicklungen L1-L3 der Elektromaschine 4 verbunden sind. Weiter dargestellt sind Strommesseinrichtungen, die die Phasenströme IU, IV und IW in den Phasenwicklungen L1-L3 messen. Die drei Phasenwicklungen L1-L3 weisen einen gemeinsamen Sternpunkt SP auf. Weiter weist die Schaltungsanordnung 1 eine Ansteuerschaltung 8 für den Wechselrichter 3 auf, die später noch näher anhand der Fig. 2 erläutert wird. Die Ansteuerschaltung 8 erhält als Eingangssignale u.a. die drei Phasenströme IU, IV, IW und erzeugt Steuersignale SI1-SI6 für die sechs Transistoren MI1-MI6. Parallel zu den Halbbrücken ist noch ein Zwischenkreiskondensator CI angeordnet.

Das AC-Ladegerät 5 weist einen galvanisch getrennten Resonanzwandler 9 auf, der eine Primärseite 10 und eine Sekundärseite 11 aufweist. Weiter weist das AC-Ladegerät eine Ladedose 12, einen EMV-Filter 13, eine Spannungsmesseinrichtung 14, eine Ansteuerschaltung 15 für den Resonanzwandler 9 und eine Wechselspannung-Steckdose 16 auf, die vorzugsweise im Innenraum des Fahrzeugs angeordnet ist. Die Primärseite 10 weist eine Halbbrücke aus Transistoren SR1-SR4 und eine Halbbrücke aus Kondensatoren CR1, CR2 auf, wobei zwischen den Mittelabgriffen eine Resonanzinduktivität LR und eine Übertrager-Induktivität LP angeordnet ist. Auf der Sekundärseite 11 ist eine Halbbrücke aus Transistoren MG1, MG2 und eine Halbbrücke aus Kondensatoren CG1, CG2 angeordnet, wobei zwischen den Mittelabgriffen eine Übertrager-Induktivität LS angeordnet ist, die magnetisch mit der Übertrager-Induktivität LP auf der Primärseite 10 gekoppelt ist. Auf der Primärseite 10 bilden die beiden antiseriell verschalteten Transistoren MR1, MR2 einen High-Side-Schalter 17 und die beiden antiseriell verschalteten Transistoren MR3, MR4 einen Low-Side-Schalter 18 aus. Die Ansteuerschaltung 15 erzeugt dann die Schaltungssignale SR1-SR4, SG1, SG2 für die Transistoren MR1-MR4, MG1, MG2 des Resonanzwandlers 9, was nachfolgend noch näher erläutert wird.

Schließlich weist die Schaltungsanordnung 1 noch eine weitere Induktivität LZ auf, die zwischen dem Sternpunkt SP und der Sekundärseite 11 des Resonanzwandlers 9 angeordnet ist. Eine Spannungsmesseinrichtung 19 erfasst die Spannung UR am Ausgang der Sekundärseite 11.

Die Ansteuerschaltung 15 weist eine Polaritätserkennung auf, d.h. diese erfasst das Vorzeichen der Spannung UI, die durch die Spannungsmesseinrichtung 14 erfasst wird. In Abhängigkeit von der erfassten Polarität werden die Transistoren SR1-SR4 angesteuert. Ist die Spannung UI > 0, werden die Transistoren MR2, MR4 durchgeschaltet und die Transistoren MR1 und MR3 mit PWM-Signalen angesteuert. Auf der Sekundärseite 11 wird der Transistor MG1 synchron zum Transistor MR1 und der Transistor MG2 synchron zum Transistor MR3 angesteuert. Dabei ist die Schaltfrequenz und das Abtastverhältnis konstant. Entsprechend werden bei UI < 0 die Transistoren MR1, MR3 durchgeschaltet und die Transistoren MR2, MR4 mit PWM-Signalen angesteuert, wobei dann Transistor MG2 synchron zu Transistor MR2 und Transistor MR1 synchron zu Transistor MR4 geschaltet wird. Der Resonanzwandler 9 erzeugt aus der Wechselspannung am Eingang eine pulsierende Gleichspannung am Ausgang. Dabei werden Verluste aufgrund von Dioden zur Gleichrichtung vermieden.

Aufgrund der Ausgangsspannung am Resonanzwandler 9 fließt ein Z-Strom IZ in den Sternpunkt SP, der sich gleichmäßig auf die drei Phasenwicklungen L1-L3 aufteilt und dann zum Laden der Hochvoltbatterie 2 verwendet werden kann. Ist die Elektromaschine 4 symmetrisch, so sind die Phasenströme IU, IV, IW exakt gleich groß und erzeugen kein Motormoment. Ansonsten kann dies ausgeregelt werden, was nun anhand der Fig. 2 näher erläutert werden soll.

In der Fig. 2 ist ein Blockschaltbild einer Ansteuerschaltung 8 für den Wechselrichter 3 dargestellt. Die Ansteuerschaltung 8 weist eine DQZ-Transformation 20 auf, die die Phasenströme IU, IV und IW in einen Längsstrom ID, einen Querstrom IQ und einen Z- oder Null-Strom IZ transformiert. Weiter weist die Ansteuerschaltung 8 eine DQ-Steuerung 21 für die Elektromaschine 4, eine Leistungsfaktorkorrektur-Schaltung 22, einen Z-Stromregler 23, eine Vorsteuerung 24, eine Störgrößenaufschaltung 25, eine inverse DQZ-Transformation 26 und eine PWM-Einheit 27 auf. Die DQ-Steuerung 21 erhält als Eingangsgrößen den Längsstrom ID, den Querstrom IQ sowie ein angefordertes Antriebsmoment M und ermittelt daraus Abtastverhältnisse DD und DQ für den Längs- und Querstrom. Die Leistungsfaktorkorrektur-Schaltung 22 erhält als Eingangsgrößen eine gewünschte Ladeleistung P und die Spannung UR am Ausgang des Resonanzwandlers. Das Ausgangssignal der Leistungsfaktorkorrektur-Schaltung 22 ist ein Soll-Z-Strom IZ_. Die Differenz von Soll-Z-Strom IZ_ und Z-Strom IZ ist die Eingangsgröße für den Z-Stromregler 23. Der Soll-Z-Strom IZ_ ist eine Eingangsgröße für die Vorsteuerung 24. Die Spannung UB an der Hochschaltbatterie 2 und die Spannung UR am Ausgang des Resonanzwandlers 9 sind die Eingangsgrößen der Störgrößenaufschaltung 25. Die Ausgangsgrößen der Vorsteuerung 24 und der Störgrößenaufschaltung 25 werden auf das Ausgangssignal des Z-Stromreglers 23 aufaddiert. Das Ergebnis ist dann ein Abtastverhältnis DZ. Die Abtastverhältnisse DD, DQ und DZ werden dann mittels der inversen DQZ-Transformation 26 in Abtastverhältnisse DU, DV, DW transformiert und mittels der PWM-Einheit 27 in Ansteuersignale SI1-SI6 für die Transistoren MI1-MI6 umgerechnet.

Im AC-Ladebetrieb ist das angeforderte Antriebsmoment M = 0. Die Ansteuerschaltung 8 regelt dann insbesondere den Z-Strom IZ so, dass sich die angeforderte Ladeleistung P einstellt. Im Antriebs-Modus ist hingegen die Ladeleistung P = 0 und durch die DQ-Steuerung 21 wird das angeforderte Antriebsmoment gestellt. Ist die Elektromaschine 4 voll symmetrisch, ist der Z-Strom IZ = 0. Soll hingegen im Antriebs-Modus auf die Wechselspannung-Steckdose 16 versorgt werden, so muss ein negativer Z-Strom IZ gestellt werden, sodass Energie von der Sekundärseite 11 auf die Primärseite 10 des Resonanzwandlers 9 übertragen werden kann.

### Bezugszeichenliste

- 1: Schaltungsanordnung
- 2: Hochvoltbatterie
- 3: Wechselrichter
- 4: Elektromaschine
- 5: AC-Ladeschaltung
- 6: Spannungsmesseinrichtung
- 7: EMV-Batteriefilter
- 8: Ansteuerschaltung
- 9: Resonanzwandler
- 10: Primärseite
- 11: Sekundärseite
- 12: Ladedose
- 13: EMV-Filter
- 14: Spannungsmesseinrichtung
- 15: Ansteuerschaltung
- 16: Wechselspannung-Steckdose
- 17: High-Side-Schalter
- 18: Low-Side-Schalter
- 19: Spannungsmesseinrichtung
- 20: DQZ-Transformation
- 21: DQ-Steuerung
- 22: Leistungsfaktorkorrektur-Schaltung
- 23: Z-Stromregler
- 24: Vorsteuerung
- 25: Störgrößenaufschaltung
- 26: DQZ-Transformation
- 27: PWM-Einheit
- CG1, CG2: Kondensatoren
- CR1, CR2: Kondensatoren
- DD, DQ, DZ: Abtastverhältnisse
- DU, DV, DW: Abtastverhältnisse
- IU, IV, IW: Phasenströme
- IZ: Z-Strom
- IZ_: Soll-Z-Strom
- L1-L3: Phasenwicklungen
- LP: Übertrager-Induktivität
- LR: Resonanzinduktivität
- LS: Übertrager-Induktivität
- LZ: Zusatzinduktivität
- M: Antriebsmoment
- MG1, MG2: Transistoren
- MI1-MI6: Transistoren
- MR1-MR4: Transistoren
- SG1, SG2: Transistoren
- SI1-SI6: Steuersignale
- SP: Sternpunkt
- SR1-SR4: Transistoren
- UB, Ul, UR: Spannung

## Patentansprüche

1. Elektrische Schaltungsanordnung (1), umfassend eine Hochvoltbatterie (2), einen Wechselrichter (3), eine Elektromaschine (4) und eine AC-Ladeschaltung (5), wobei die AC-Ladeschaltung (5) einen galvanisch getrennten Resonanzwandler (9) aufweist und ein Sternpunkt (SP) der Elektromaschine (4) direkt mit dem galvanisch getrennten Resonanzwandler (9) verbunden ist, wobei dem Wechselrichter (3) eine Ansteuerschaltung (8) zugeordnet ist, wobei die Ansteuerschaltung (8) eine DQZ-Transformation (20), eine DQ-Steuerung (21) für die Elektromaschine (4), einen Z-Stromregler (23), eine inverse DQZ-Transformation (26), eine PWM-Einheit (27) und eine Leistungsfaktorkorrektur-Schaltung (22) aufweist, wobei die Leistungsfaktorkorrektur-Schaltung (22) in Abhängigkeit einer Spannung (UR) am Ausgang des Resonanzwandlers (9) und einer vorgegebenen Ladeleistung (P) einen Soll-Z-Strom (IZ_) ermittelt.

2. Elektrische Schaltungsanordnung nach Anspruch 1, **dadurch gekennzeichnet, dass** die Ansteuerschaltung (8) zusätzlich eine Störgrößenaufschaltung (25) und/oder eine Vorsteuerung (24) aufweist.

3. Elektrische Schaltungsanordnung nach Anspruch 1 oder 2, **dadurch gekennzeichnet, dass** der galvanisch getrennte Resonanzwandler (9) auf der Primärseite (10) eine Halbbrücke mit einem High-Side-Schalter (17) und einen Low-Side-Schalter (18) und eine Halbbrücke aus einem ersten Resonanzkondensator (CR1) und einem zweiten Resonanzkondensator (CR2) aufweist, wobei zwischen den Mittelabgriffen der beiden Halbbrücken eine Resonanzinduktivität (LR) und eine Übertrager-Induktivität (LP) angeordnet ist, die magnetisch mit einer Übertrager-Induktivität (LS) auf der Sekundärseite (11) gekoppelt ist, wobei der High-Side-Schalter (17) und der Low-Side-Schalter (18) vollsperrend sind.

4. Elektrische Schaltungsanordnung nach Anspruch 3, **dadurch gekennzeichnet, dass** der High-Side-Schalter (17) und der Low-Side-Schalter (18) durch zwei antiseriell verschaltete MOSFETs oder IGBTs gebildet ist.

5. Elektrische Schaltungsanordnung nach Anspruch 3, **dadurch gekennzeichnet, dass** der High-Side-Schalter (17) und der Low-Side-Schalter (18) als GaN-BIDFET ausgebildet sind.

6. Elektrische Schaltungsanordnung nach einem der vorangegangenen Ansprüche, **dadurch gekennzeichnet, dass** der galvanisch getrennte Resonanzwandler (9) auf der Sekundärseite (11) eine Halbbrücke mit zwei Kondensatoren (CG1, CG2) und eine Halbbrücke mit zwei Transistoren (MG1, MG2) aufweist, wobei zwischen den Mittelabgriffen eine Übertrager-Induktivität (LS) angeordnet ist.

7. Elektrische Schaltungsanordnung nach einem der vorangegangenen Ansprüche, **dadurch gekennzeichnet, dass** eine Ansteuerschaltung (15) des galvanisch getrennten Resonanzwandlers (9) derart ausgebildet ist, eine Polarität der anliegenden Ladespannung (UI) zu erfassen und die Schalter auf der Primärseite (10) und der Sekundärseite (11) synchron mit einer festen Schaltfrequenz anzusteuern.

8. Elektrische Schaltungsanordnung nach einem der vorangegangenen Ansprüche, **dadurch gekennzeichnet, dass** zwischen dem Sternpunkt (SP) der Elektromaschine (4) und dem galvanisch getrennten Resonanzwandler (9) eine Zusatzinduktivität (LZ) angeordnet ist.

9. Elektrische Schaltungsanordnung nach einem der vorangegangenen Ansprüche, **dadurch gekennzeichnet, dass** an der Primärseite (10) mindestens eine Wechselspannung-Steckdose (16) angeordnet ist, wobei die Schaltungsanordnung (1) derart ausgebildet ist, während des Fahrbetriebes die Wechselspannung-Steckdose (16) zu versorgen.
